# EUROPEAN PATENT APPLICATION

(11) **EP 3 579 298 A1**
(43) Date of publication of application: **11.12.2019**
(21) Application number: 18747429.1
(22) Date of filing: 05.02.2018
(51) Int. Cl.: H01M 2/10, H01M 2/20, H01M 2/34, H01M 10/48

(54) **BATTERY PACK AND HOLDER**

(30) Priority: 06.02.2017 JP 2017019870
(71) Applicant: Hitachi Automotive Systems, Ltd., Hitachinaka-shi Ibaraki 312-8503 (JP)
(72) Inventor: NAKAJIMA, Takayuki, Hitachinaka-shi Ibaraki 312-8503 (JP); NAKANO, Youichi, Hitachinaka-shi Ibaraki 312-8503 (JP); SUEMATSU, Hisayuki, Hitachinaka-shi Ibaraki 312-8503 (JP); TAKAHASHI, Yukinori, Hitachinaka-shi Ibaraki 312-8503 (JP)
(74) Representative: MERH-IP Matias Erny Reichl Hoffmann Patentanwälte PartG mbB
(86) International application number: PCT/JP2018/003859
(87) International publication number: WO 2018/143465

(57) **Abstract**

A battery pack includes: battery groups which are formed by stacking a plurality of battery cells each including a terminal surface having one side in a longitudinal direction including a positive electrode terminal and the other side in the longitudinal direction including a negative electrode terminal, and a pair of stacked surfaces adjacent to the terminal surface so that the terminal surfaces of the plurality of battery cells are directed in the same direction and the positive electrode terminal and the negative electrode terminal are alternately arranged, the stacked surfaces facing each other; and a holder which accommodates two or more kinds of electric components electrically connected to the battery groups and is disposed so that the electric components face a surface in which the positive electrode terminals and the negative electrode terminals of the battery groups are arranged. The holder includes a load-side positive electrode terminal and a load-side negative electrode terminal to which a load is connected.

## Description

### Technical Field

The present invention relates to a battery pack and a holder.

### Background Art

Conventionally, an aqueous-solution-based battery such as a lead-acid battery, a nickel-cadmium battery, a nickel-hydrogen battery, or the like has been mainstream in the field of rechargeable secondary batteries. However, a lithium secondary battery with a high energy density has emerged with miniaturization and weight reduction of an electronic device, and research, development, and commercialization of the lithium secondary battery have been conducted rapidly. Meanwhile, automobile manufacturers have developed an electric vehicle (EV) or a hybrid electric vehicle (HEV) in which an electric motor assists in driving of the HEV to solve problems such as global warming and fuel depletion, and as a result, a secondary battery with high capacity and high output has become demanded as a power source of the EV or HEV. A non-aqueous-solution-based lithium secondary battery with a high voltage has emerged as a power source satisfying the requirement as described above. In particular, since a prismatic lithium secondary battery has excellent volumetric efficiency when being packed, expectations for development of a prismatic lithium secondary battery for an HEV or EV have become high.

PTL 1 discloses a battery pack including: a battery module including a plurality of battery cells therein; a battery pack case in which the battery modules are disposed in a sealed inner space of the battery pack case; a cell connection main electric conductor connecting the battery cells to each other; an external main electric conductor electrically connecting an outer portion of the battery pack case and an inner portion of the battery pack case to each other; and an electric control component connected between the cell connection main electric conductor and the external main electric conductor through a sub-electric conductor, in which the sub-electric conductor is provided to be exposed in the battery pack case.

### Citation List

### Patent Literature

PTL 1: JP 2015-062153 A

### Summary of Invention

### Technical Problem

An object of the invention is to reduce costs for manufacturing a battery pack.

### Solution to Problem

A battery pack provided according to a first aspect of the invention includes: battery groups which are formed by stacking a plurality of battery cells each including a terminal surface having one side in a longitudinal direction including a positive electrode terminal and the other side in the longitudinal direction including a negative electrode terminal, and a pair of stacked surfaces adjacent to the terminal surface so that the terminal surfaces of the plurality of battery cells are directed in the same direction and the positive electrode terminal and the negative electrode terminal are alternately arranged, the stacked surfaces facing each other; and a holder which accommodates two or more kinds of electric components electrically connected to the battery groups and is disposed so that the electric components face a surface in which the positive electrodes and the negative electrodes of the battery groups are arranged. The holder includes a load-side positive electrode terminal and a load-side negative electrode terminal to which a load is connected.

A holder provided according to a second aspect of the invention constitutes the battery pack.

### Advantageous Effects of Invention

According to the invention, it is possible to reduce costs for manufacturing a battery pack.

### Brief Description of Drawings

[FIG. 1] FIG. 1 is a perspective view of an exterior of a battery pack.
[FIG. 2] FIG. 2 is an exploded perspective view of the battery pack.
[FIG. 3] FIG. 3 is a perspective view of a battery module.
[FIG. 4] FIG. 4 is a view illustrating a configuration of a bus bar incorporated into a bus bar case.
[FIG. 5] FIG. 5 is a view illustrating a configuration in which the bus bar case is removed from the battery module illustrated in FIG. 3.
[FIG. 6] FIG. 6 is a view illustrating a connection relationship among the bus bar, a first battery group, and a second battery group.
[FIG. 7] FIG. 7 is a perspective view of a holder 41 as viewed from an angle which is approximately the same as that of FIG. 2.
[FIG. 8] FIG. 8 is a perspective view of the holder 41 as viewed from a side opposite to that of FIG. 2.

### Description of Embodiments

### -Embodiment-

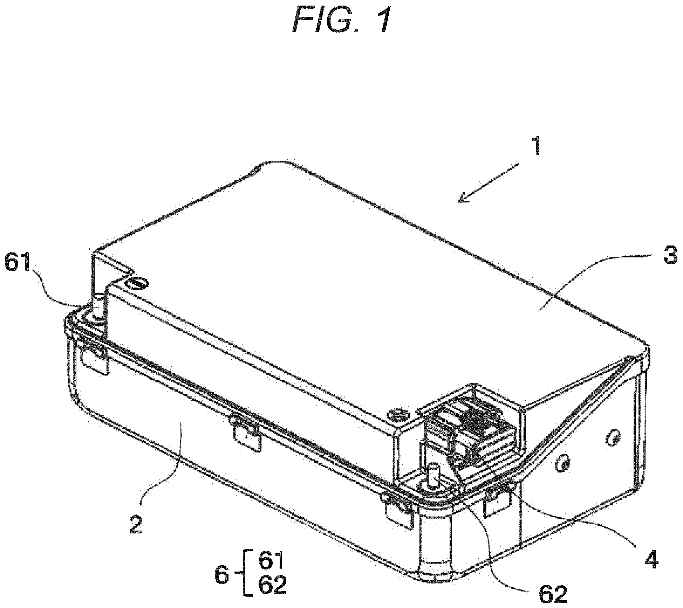

Hereinafter, a battery pack according to a first embodiment of the invention will be described with reference to FIGS. 1 to 8.

FIG. 1 is a perspective view of an exterior of a battery pack 1. The battery pack 1 includes a case body 2 and an upper cover 3. A load-side negative electrode terminal 61 is provided at one end of an upper surface of the battery pack 1 in a longitudinal direction, and a load-side positive electrode terminal 62 is provided at the other end. Hereinafter, the load-side negative electrode terminal 61 and the load-side positive electrode terminal 62 will be collectively referred to as a load-side terminal 6. The load-side terminal 6 is an external terminal of the battery pack 1 and is connected with a load. A high-voltage (HV) cable is connected to the load-side terminal 6, such that the battery pack 1 supplies power to an electric vehicle, a hybrid electric vehicle, or an electric device through the HV cable.

A signal connector 4 is disposed on a side surface of the battery pack 1. The signal connector 4 is a controller signal connector of the battery pack 1, and, for example, is connected to a controller of a vehicle in which the battery pack 1 is mounted to transmit or receive information to and from a board to be described later or supply power to the board.

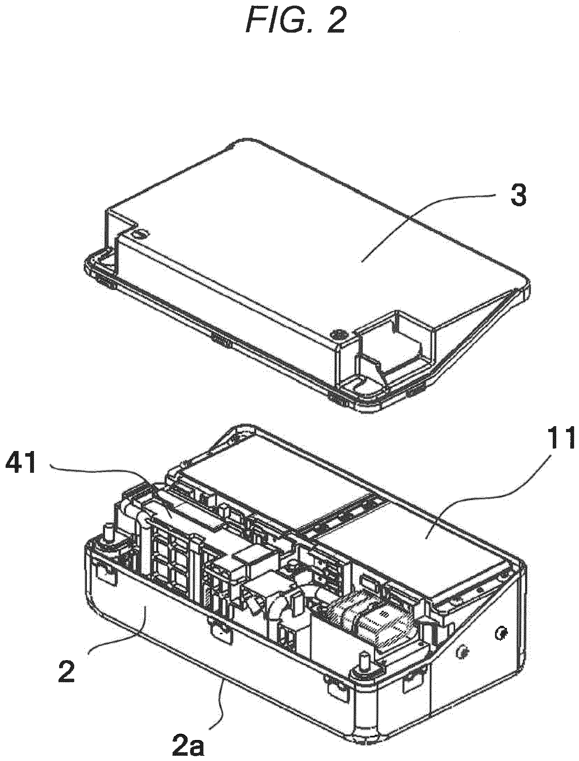

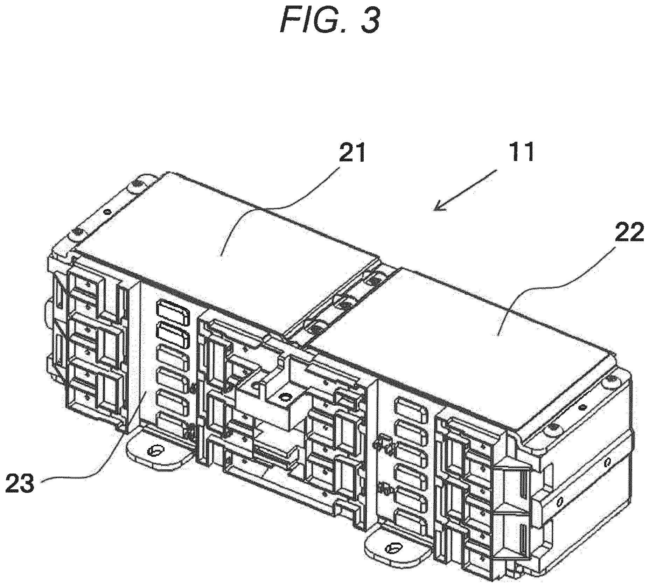

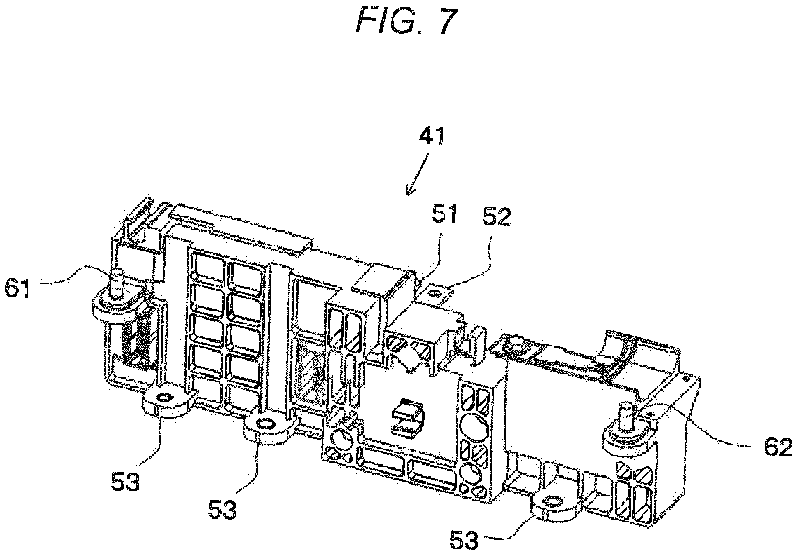

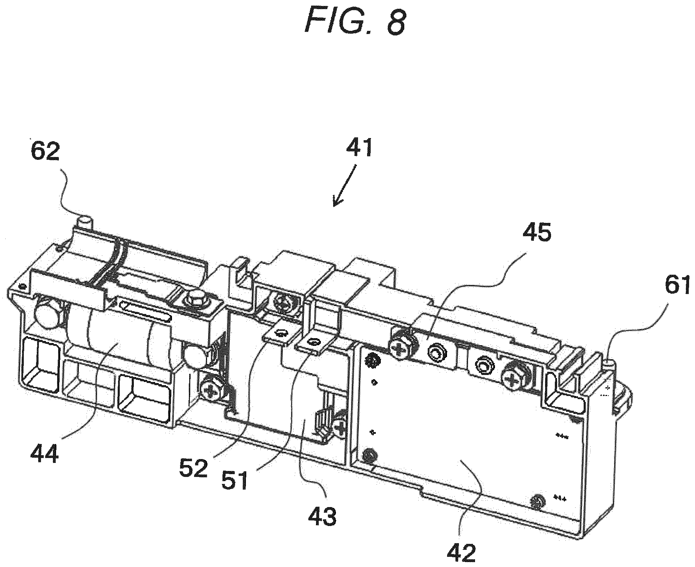

FIG. 2 is an exploded perspective view of the battery pack 1 illustrated in FIG. 1. The case body 2 is a box-shaped member which has a bottom portion 2a and an open top. A battery module 11, and a holder 41 which accommodates electric components in the case body 2. The battery module 11 will be described in detail with reference to FIGS. 3 to 6, and the holder 41 will be described in detail with reference to FIGS. 7 and 8.

FIG. 3 is a perspective view of the battery module 11 illustrated in FIG. 2. In the battery module 11, a first battery group 21 and a second battery group 22 in which a plurality of battery cells to be described later are stacked are provided side by side in a longitudinal direction of the battery module 11, and a bus bar case 23 is disposed on a wide-width surface of the battery module 11, the wide-width surface being illustrated in the drawing. The bus bar case 23 is a non-conductive member and various conductive bus bars to be described below are incorporated into the bus bar case 23.

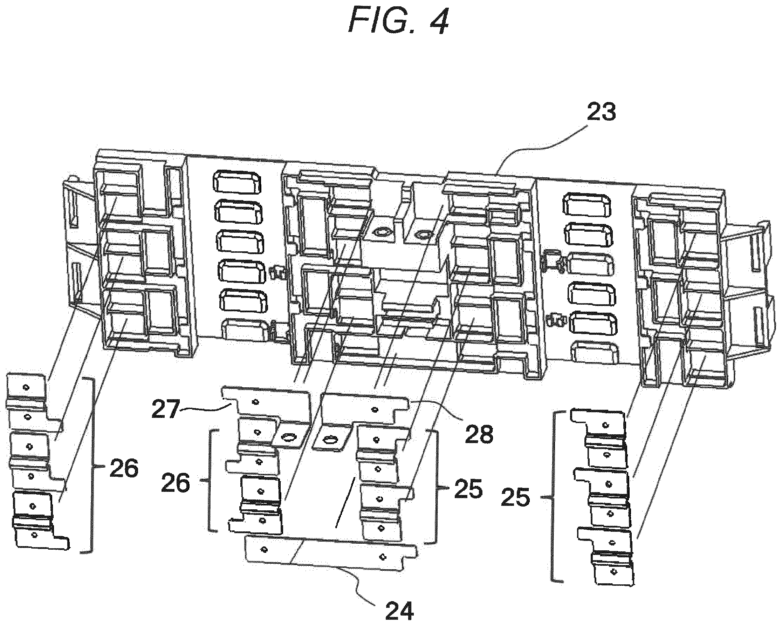

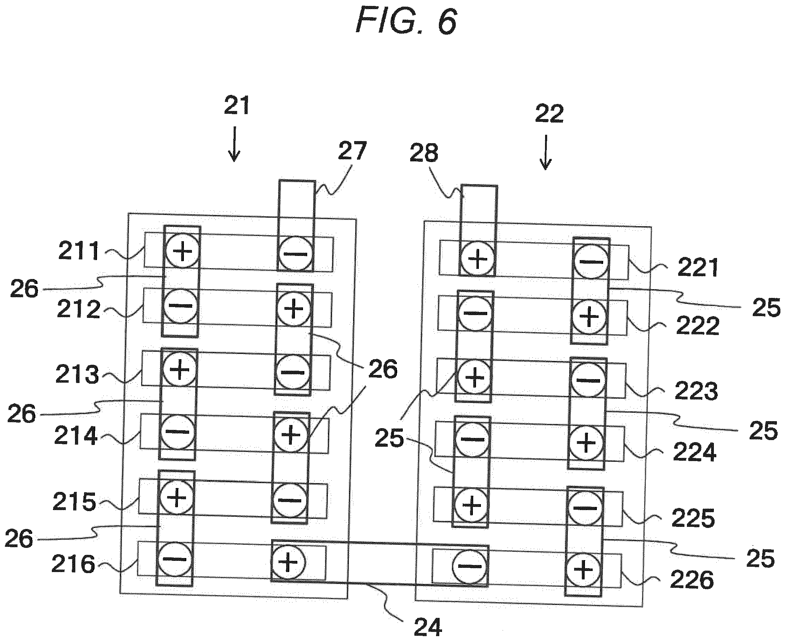

FIG. 4 is a view illustrating a configuration of a bus bar incorporated into the bus bar case 23. An inter-group bus bar 24, a first inter-cell bus bar 25, a second inter-cell bus bar 26, a negative electrode-connection bus bar 27, and a positive electrode-connection bus bar 28 are incorporated into the bus bar case 23. The inter-group bus bar 24 connects the first battery group 21 and the second battery group 22 to each other. The first inter-cell bus bar 25 connects the battery cells constituting the first battery group 21 to one another in series. The second inter-cell bus bar 26 connects the battery cells constituting the second battery group 22 to one another in series. The negative electrode-connection bus bar 27 connects a negative electrode terminal of the first battery group 21 to be described later and the holder 41 to each other. The positive electrode-connection bus bar 28 connects a positive electrode terminal of the second battery group 22 to be described later and the holder 41 to each other. The negative electrode-connection bus bar 27 and the positive electrode-connection bus bar 28 are disposed at an upper portion of the center of the bus bar case 23, and the inter-group bus bar 24 is disposed at a lower portion of the center of the bus bar case 23. A connection relationship among various bus bars, the first battery group 21, and the second battery group 22 will be described again with reference to FIG. 6.

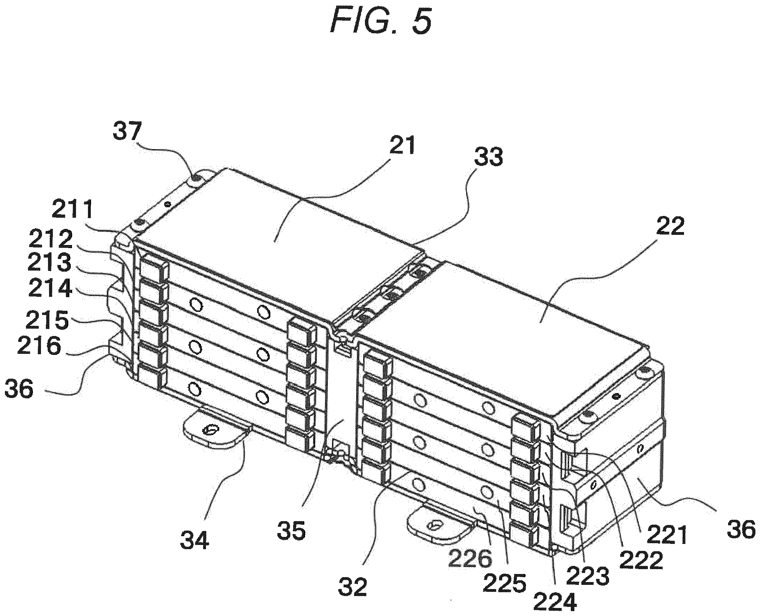

FIG. 5 is a view illustrating a configuration in which the bus bar case 23 is removed from the battery module 11 illustrated in FIG. 3. The first battery group 21 includes six battery cells indicated by reference numerals 211 to 216, respectively, and the second battery group 22 includes six battery cells indicated by reference numerals 221 to 226, respectively. The battery cell is, for example, a lithium ion secondary battery. A surface of each battery cell which is illustrated in the drawing is a terminal surface, and one side of the terminal surface in a longitudinal direction includes a positive electrode terminal and the other side of the terminal surface in the longitudinal direction includes a negative electrode terminal. Although not illustrated in FIG. 5, it should be noted that a terminal-opposite surface paired with the terminal surface is provided at a back side (a side which is not seen in the drawing) of the terminal surface of the battery cell. These battery cells are stacked so that stacked surfaces in a top-bottom direction in the drawing face each other, and are alternatively vertically inverted at the time of being stacked. For this reason, the positive electrode terminal and the negative electrode terminal are adjacent to each other in the top-bottom direction in the drawing. A partition member 32 is disposed between the respective battery cells. The partition member 32 is also disposed on an upper side of a battery cell of a top side and a bottom surface of a battery cell of a bottom side. The partition member 32 has a plate shape and is formed of, for example, a resin such as polybutylene terephthalate (PBT) or the like.

A center plate 35 is disposed between the first battery group 21 and the second battery group 22. Side plates 36 are disposed at opposite sides so that the first battery group 21 and the second battery group 22 are interposed between the side plates 36. A pair of narrow-width surfaces adjacent to a terminal surface, a terminal-opposite surface, and a pair of stacked surfaces are provided at opposite end sides of each of the battery cells constituting the first battery group 21 and the second battery group 22, respectively, in the longitudinal direction, that is, at portions coming into contact with the center plate 35 and the side plates 36, respectively. In addition, the battery module 11 includes an upper end plate 33 and a lower end plate 34 which hold the first battery group 21 and the second battery group 22 in the top-bottom direction in the drawing. The upper end plate 33, the lower end plate 34, the center plate 35, and the side plate 36 are fastened by fastening bolts 37.

FIG. 6 is a view illustrating a connection relationship among the bus bar, the first battery group 21, and the second battery group 22. In FIG. 6, however, the partition member 32 is not illustrated for convenience of illustration, and an interval between the battery cells illustrated in FIG. 6 is larger than an actual interval. Further, in each battery cell, the positive electrode terminal is indicated by a plus symbol in a circle, and the negative electrode terminal is indicated by a minus symbol in a circle. As described above, the battery cells constituting the first battery group 21 and the second battery group 22, respectively, are stacked while being vertically inverted by one layer. For this reason, positive electrode terminals of battery cells adjacent to each other in a top-bottom direction in FIG. 6 are adjacent to negative electrode terminals of the battery cells.

The positive electrode terminal and the negative electrode terminal which are adjacent to each other are connected by the first inter-cell bus bar 25 and the second inter-cell bus bar 26. That is, six battery cells indicated by reference numerals 211 to 216 are electrically connected to one another in series by the first inter-cell bus bars 25, and six battery cells indicated by reference numerals 221 to 226 are electrically connected to one another in series by the second inter-cell bus bar 26. The inter-group bus bar 24 electrically connects the first battery group 21 and the second battery group 22 to each other in series. In FIG. 6, the inter-group bus bar 24 connects a positive electrode of a battery cell 216 belonging to the first battery group 21 and a negative electrode of a battery cell 226 belonging to the second battery group 22 to each other.

In addition, arrangement of the positive electrode terminals and the negative electrode terminals of the first battery group 21 is the same as that of the second battery group 22. For example, as illustrated in FIG. 6, if only considering the positive electrode terminals and the negative electrode terminals of the first and the second battery groups 21 and 22, when the arrangement of the positive electrode terminals and the negative electrode terminals of one of the first and second battery groups 21 and 22 moves in parallel, the arrangement of the positive electrode terminals and the negative electrode terminals of the one of the first and second battery groups 21 and 22 coincides with that of the other one of the first and second battery groups 21 and 22. Based on such a relationship, terminals of the first and second battery groups 21 and 22 adjacent to each other have different polarities. For this reason, the inter-group bus bar 24 may be shortened and it is possible to suppress electrical resistance in the battery pack 1, power loss, and generation of heat.

The negative electrode-connection bus bar 27 is connected to a terminal which is not connected to any of the first inter-cell bus bar 25 and the inter-group bus bar 24 in the first battery group 21, that is, the negative electrode terminal of the battery cell 211. The positive electrode-connection bus bar 28 is connected to a terminal which is not connected to any of the second inter-cell bus bar 26 and the inter-group bus bar 24 in the second battery group 22, that is, the positive electrode terminal of the battery cell 221. The negative electrode terminal of the battery cell 211 is a terminal having the lowest potential in the first battery group 21 and the second battery group 22 which are electrically connected in series. The positive electrode terminal of the battery cell 221 is a terminal having the highest potential in the first battery group 21 and the second battery group 22 which are electrically connected in series.

FIGS. 7 and 8 are perspective views of the holder 41. FIG. 7 is a perspective view of the holder 41 as viewed from an angle which is approximately the same as that of FIG. 2, and FIG. 8 is a perspective view of the holder 41 as viewed from a side opposite to that of FIG. 2. That is, the battery module 11 is disposed behind the holder 41 based on FIG. 7, and the battery module 11 is disposed in front of the holder 41 based on FIG. 8. The holder 41 is formed of, for example, a resin such as PBT, or the like. The holder 41 illustrated in FIGS. 7 and 8 includes a voltage sensing board 42, a relay 43, a fuse 44, a battery-side negative electrode terminal 51, a battery-side positive electrode terminal 52, a fixing portion 53, a load-side negative electrode terminal 61, and a load-side positive electrode terminal 62.

As illustrated in FIG. 7, the load-side terminals 6 described with reference to FIG. 1 are provided at both ends of the holder 41 in a longitudinal direction of the holder 41. Three fixing portions 53 illustrated at a lower side of FIG. 7 fix the holder 41 to the case body 2. The battery-side negative electrode terminal 51 and the battery-side positive electrode terminal 52 illustrated at an upper portion of the center of FIG. 7 are electrical contacts with the battery module 11. The battery-side negative electrode terminal 51 is connected to the negative electrode-connection bus bar 27 illustrated in FIG. 4, and the battery-side positive electrode terminal 52 is connected to the positive electrode-connection bus bar 28.

As illustrated in FIG. 8, the voltage sensing board 42, the relay 43, the fuse 44, and a shunt resistor 45 are mounted on the holder 41. The fuse 44, the load-side positive electrode terminal 62, and the battery-side positive electrode terminal 52 are disposed at one side of the holder 41 in the longitudinal direction, that is, on the left side of FIG. 8. The voltage sensing board 42, the load-side negative electrode terminal 61, and the battery-side negative electrode terminal 51 are disposed at the other side of the holder 41 in the longitudinal direction, that is, on the right side of FIG. 8. In addition, the load-side negative electrode terminal 61, the shunt resistor 45, and the battery-side negative electrode terminal 51 are disposed sequentially from an end portion of the holder 41, that is, the right end of FIG. 8, to the central portion of FIG. 8.

The voltage sensing board 42 measures a voltage of the battery module 11 by using the shunt resistor 45 and a circuit for monitoring or controller the entire battery pack 1 is mounted. The shunt resistor 45 is a part of the voltage sensing board 42 and is disposed between the battery-side negative electrode terminal 51 and the load-side negative electrode terminal 61 at an upper portion of the holder 41. The relay 43 and the fuse 44 are fixed to the holder 41 by a screw and electrically connected to the load-side positive electrode terminal 62 and the battery-side positive electrode terminal 52.

A descending order of potentials of the members constituting the holder 41 is as follows: the load-side positive electrode terminal 62, the fuse 44, the relay 43, and the battery-side positive electrode terminal 52, the battery-side negative electrode terminal 51, the shunt resistor 45, and the load-side negative electrode terminal 61. As described above, levels of positions at which the members constituting the holder 41 are disposed coincide with levels of the potentials of the members constituting the holder 41, and thus an electrical path is short.

According to the first embodiment described above, the following effects can be obtained.
(1) The battery module 1 includes: the first battery group 21 and the second battery group 22 which are formed by stacking a plurality of battery cells each including a terminal surface having one side in a longitudinal direction including a positive electrode terminal and the other side in the longitudinal direction including a negative electrode terminal, and a pair of stacked surfaces adjacent to the terminal surface so that terminal surfaces of the plurality of battery cells are directed in the same direction and the positive electrode terminal and the negative electrode terminal are alternately arranged, the stacked surfaces facing each other; and the holder 41 which accommodates two or more kinds of electric components electrically connected to the first battery group 21 and the second battery group 22 and is disposed so that the electric components face a surface in which positive electrode terminals and negative electrode terminals of the battery groups are arranged, that is, a surface illustrated in FIGS. 3 and 5.
   The positive electrode terminals and the negative electrode terminals of the first battery group 21 and the second battery group 22 which constitute the battery module 11 are arranged in the same surface. Therefore, a degree of freedom in disposition of the electric components is high and it is possible to incorporate a plurality of electric components into the holder 41. As a result, man-hours for mounting components and the number of members for mounting the components such as screws can be reduced, such that costs for manufacturing the battery pack 1 can be reduced.
(2) The electric components included in the holder 41 are two or more of components including a contactor, the fuse, and the voltage sensing board. In general, when a secondary battery is used, the contactor, the fuse, and the voltage sensing board are used in combination. As described above, the holder 41 includes the components selected from the contactor, the fuse, and the voltage sensing board, such that it is possible to reduce the number of electric components to be further combined with the battery pack 1 and reduce costs for manufacturing a product including the battery pack 1.
(3) The battery groups are constituted by the first battery group 21 and the second battery group 22. As illustrated in FIGS. 5 and 6, arrangement of the positive electrode terminals and the negative electrode terminals of the first battery group 21 is the same as that of the second battery group 22, and the number of battery cells constituting the first battery group 21 and the number of battery cells constituting the second battery group 22 each are an even number. The battery pack 1 includes the inter-group bus bar 24 which electrically connects the first battery group 21 and the second battery group 22 to each other in series by connecting a positive electrode terminal and a negative electrode terminal of battery cells disposed at one end of the first battery group 21 and one end of the second battery group 22, respectively, in a stacking direction, to each other, the positive electrode terminal and the negative electrode terminal being adjacent to each other. The battery pack 1 includes the first inter-cell bus bar 25 which electrically connects the battery cells constituting the first battery group 21 to one another in series by connecting the positive electrode terminal and the negative electrode terminal of the adjacent battery cells in the first battery group 21 to each other. The battery pack 1 includes the second inter-cell bus bar 26 which electrically connects battery cells constituting the second battery group 22 to one another in series by connecting a positive electrode terminal and a negative electrode terminal of adjacent battery cells in the second battery group 22 to each other. The battery pack 1 includes the positive electrode-connection bus bar 28 which is connected to a positive electrode terminal having the highest potential and the negative electrode-connection bus bar 27 which is connected to a negative electrode terminal having the lowest potential in the first battery group 21 and the second battery group 22 which are electrically connected to each other in series. The positive electrode-connection bus bar 28 and the negative electrode-connection bus bar 27 are connected to the holder 41.
   Since the arrangement of the positive electrode terminals and the negative electrode terminals of the first battery group 21 is the same as that of the second battery group 22, a length of the inter-group bus bar 24 can be shortened. In addition, since the number of battery cells constituting the first battery group 21 and the number of battery cells constituting the second battery group 22 each are an even number, when the inter-group bus bar 24 is connected to one end in the stacking direction, terminals disposed near the other end in the stacking direction are not connected to those of adjacent battery cells by the first inter-cell bus bar 25 or the second inter-cell bus bar 26. For this reason, the negative electrode-connection bus bar 27 and the positive electrode-connection bus bar 28 can be provided at the center of the battery module 11 in the longitudinal direction without forming a conduction path.
(4) The voltage sensing board 42 includes the shunt resistor 45. The holder 41 further includes the battery-side positive electrode terminal 52 electrically connected to the positive electrode-connection bus bar 28, and the battery-side negative electrode terminal 51 electrically connected to the negative electrode-connection bus bar 27. The battery-side negative electrode terminal 51, the shunt resistor 45, and the load-side negative electrode terminal 61 are disposed in an order of the load-side negative electrode terminal 61, the shunt resistor 45, and the battery-side negative electrode terminal 51 from an end portion of the holder 41 toward the central portion of the holder 41. For this reason, an electrical resistance can be decreased by shortening the conduction path for connecting the load-side negative electrode terminal 61 and the battery-side negative electrode terminal 51 to each other in the holder 41, thereby reducing power consumption and heat generation.
(5) The voltage sensing board 42 and the fuse 44 are included in the electric components included in the holder 41. The fuse 44 and the load-side positive electrode terminal 62 are disposed at one side of the holder 41 in the longitudinal direction, and the voltage sensing board 42 and the load-side negative electrode terminal 61 are disposed at the other side of the holder 41 in the longitudinal direction.

### (Modified Example 1)

The number of battery cells constituting the first battery group 21 and the number of battery cells constituting the second battery group 22 each are an odd number. In this case, a difference occurs between the embodiment described above and this modified example only in regard to the fact that a length of the inter-group bus bar 24 is lengthened. The length of the inter-group bus bar 24 in this case is a length by which, for example, a positive electrode terminal of the battery cell 215 is connected to a negative electrode terminal of the battery cell 225.

### (Modified Example 2)

The holder 41 may include any two of the voltage sensing board 42, the relay 43, and the fuse 44, rather than all of those three components. In addition, the holder 41 may further include a pre-charge relay.

In the above description, various embodiments and modified examples have been described, but the invention is not limited to contents thereof. Other aspects considered to be within the technical idea of the invention are included in the scope of the invention.

The disclosure of the following priority application is incorporated herein by reference.

Japanese Patent Application No. 2017-019870 (filed on Feb. 6, 2017)

### Reference Signs List

- 1: battery pack
- 2: case body
- 6: load-side terminal
- 11: battery module
- 21: first battery group
- 22: second battery group
- 23: bus bar case
- 24: inter-group bus bar
- 25: first inter-cell bus bar
- 26: second inter-cell bus bar
- 27: negative electrode-connection bus bar
- 28: positive electrode-connection bus bar
- 41: holder
- 42: voltage sensing board
- 43: relay
- 44: fuse
- 45: shunt resistor
- 51: battery-side negative electrode terminal
- 52: battery-side positive electrode terminal
- 53: fixing portion
- 61: load-side negative electrode terminal
- 62: load-side positive electrode terminal
- 211 to 216 and 211 to 226: battery cell

## Claims

1. A battery pack, comprising:
battery groups which are formed by stacking a plurality of battery cells each including a terminal surface having one side in a longitudinal direction including a positive electrode terminal and another side in the longitudinal direction including a negative electrode terminal, and a pair of stacked surfaces adjacent to the terminal surface so that the terminal surfaces of the plurality of battery cells are directed in the same direction and the positive electrode terminal and the negative electrode terminal are alternately arranged, the stacked surfaces facing each other; and
a holder which accommodates two or more kinds of electric components electrically connected to the battery groups and is disposed so that the electric components face a surface in which the positive electrode terminals and the negative electrode terminals of the battery groups are arranged,
wherein the holder includes a load-side positive electrode terminal and a load-side negative electrode terminal to which a load is connected.

2. The battery pack according to claim 1, wherein
the electric components are two or more of components including a contactor, a fuse, and a voltage sensing board.

3. The battery pack according to claim 1, wherein
the battery groups are constituted by a first battery group and a second battery group,
arrangement of the positive electrode terminals and the negative electrode terminals of the first battery group is the same as that of the second battery group,
the number of battery cells constituting the first battery group and the number of battery cells constituting the second battery group each are an even number,
the battery pack further comprises an inter-group bus bar which electrically connects the first battery group and the second battery group to each other in series by connecting the positive electrode terminal and the negative electrode terminal of the battery cells disposed at one end of the first battery group and one end of the second battery group, respectively, in a stacking direction, to each other, the positive electrode terminal and the negative electrode terminal being adjacent to each other,
a first inter-cell bus bar which electrically connects the battery cells constituting the first battery group to each other in series by connecting the positive electrode terminal and the negative electrode terminal of the adjacent battery cells in the first battery group to each other,
a second inter-cell bus bar which electrically connects the battery cells constituting the second battery group to each other in series by connecting the positive electrode terminal and the negative electrode terminal of the adjacent battery cells in the second battery group to each other,
a positive electrode-connection bus bar which is connected to the positive electrode terminal having a highest potential in the first battery group and the second battery group which are electrically connected to each other in series, and
a negative electrode-connection bus bar which is connected to the negative electrode terminal having a lowest potential in the first battery group and the second battery group which are electrically connected to each other in series, and
the positive electrode-connection bus bar and the negative electrode-connection bus bar are connected to the holder.

4. The battery pack according to claim 3, wherein
the electric components include a voltage sensing board,
the voltage sensing board includes a shunt resistor,
the holder further includes a battery-side positive electrode terminal electrically connected to the positive electrode-connection bus bar, and a battery-side negative electrode terminal electrically connected to the negative electrode-connection bus bar, and
the battery-side negative electrode terminal, the shunt resistor, and the load-side negative electrode terminal are disposed in an order of the load-side negative electrode terminal, the shunt resistor, and the battery-side negative electrode terminal from an end portion of the holder toward a central portion of the holder.

5. The battery pack according to claim 3, wherein
the electric components include a voltage sensing board and a fuse,
the fuse and the load-side positive electrode terminal are disposed at one side of the holder in the longitudinal direction, and
the voltage sensing board and the load-side negative electrode terminal are disposed at another side of the holder in the longitudinal direction.

6. A holder constituting the battery pack according to claim 1.
